Europäisches Patentamt

European Patent Office

Office européen des brevets

(11) Veröffentlichungsnummer: **0 416 637 A1**

## (12) EUROPÄISCHE PATENTANMELDUNG

(21) Anmeldenummer: **90117225.4**

(22) Anmeldetag: **06.09.90**

(51) Int. Cl.5: **A61C 19/10**

(30) Priorität: **07.09.89 DE 3929737**

(43) Veröffentlichungstag der Anmeldung:
**13.03.91 Patentblatt 91/11**

(84) Benannte Vertragsstaaten:
**AT BE CH DE DK ES FR GB GR IT LI LU NL SE**

(71) Anmelder: **Hahn, Rainer, Dr.med.dent.
Hindenburgstrasse 119
W-7300 Esslingen(DE)**

(72) Erfinder: **Hahn, Rainer, Dr.med.dent.
Hindenburgstrasse 119
W-7300 Esslingen(DE)**

(74) Vertreter: **von Samson-Himmelstjerna,
Friedrich R. Dipl.-Phys. et al
Samson & Bülow Widenmayerstrasse 5/I
W-8000 München 22(DE)**

(54) **Set zum Auswählen einer Zahnfarbe.**

(57) Zur genauen Anpassung der Farben bzw. Farbverteilung eines Zahnersatzes an die jeweiligen Gegebenheiten bei einem Patienten ist ein Set zum Auswählen einer Zahnfarbe für die Herstellung von Zahnersatz vorgesehen. Das Set weist mehrere plättchenartige Farbmuster (11) mit wenigstens einem gekrümmten Abschnitt (12) auf. Wenigstens ein Farbmuster (11) liegt dabei in der Größenordnung lediglich der Breite eines Zahnes (31;34). Der gekrümmte Abschnitt (12) dieses Farbmusters weist eine Krümmung auf, derart, daß er flächig an die sichtbaren Teile der Zähne anlegbar ist. Die Maßnahme, daß ein Farbmuster nur eine einzige, einem Zahnkompartiment (Zahnschmelz, Zahnbein oder Zahnhals) entsprechende Farbe aufweist, dient ebenso der genauen Farbanpassung, wie die weitere Maßnahme, daß ein für die Farbmuster vorgesehenes Trägerelement (22) aus der gleichen Verblendmasse besteht, wie die für die Farbauswahl vorgesehene außenliegende eingefärbte Schicht (21).

Fig. 3

## SET ZUM AUSWÄHLEN EINER ZAHNFARBE

Die Erfindung betrifft ein Set zum Auswählen einer Zahnfarbe für die Herstellung von Zahnersatz, mit mehreren plättchenartigen Farbmustern, die wenigstens einen gekrümmten Abschnitt aufweisen (Oberbegriff der Patentansprüche 1 bis 3).

Die Farbe eines einzelnen Zahns ist nicht gleichmäßig und auch nicht gleichförmig über den Zahn verteilt. Die Farbhelligkeit und die Transparenz nehmen von der Schneidekante oder der Kaufläche eines Zahns zum Zahnhals hin ab. Der Zahnschmelz zeigt eine weißlich-bläuliche Farbe, das Zahnbein gelbliche bis bräunliche Farbtöne. Zahnhals und Wurzelzement sind ebenfalls von gelblich-bräunlicher Farbe, meist jedoch dunkler als das entsprechende Zahnbein. Die Eckzähne sind im allgemeinen etwas dunkler als die übrigen Zähne.

Die Farbtönungen der Zähne können bei verschiedenen Individuen stark unterschiedlich sein. Darüber hinaus sind auf einzelnen Zähnen häufig farbliche Einschlüsse zu finden, die dunkler oder heller als die unmittelbare Umgebung getönt sind. Schließlich werden mit zunehmendem Lebensalter die Zähne dunkler und verlieren an Transluzenz.

Bei der Restauration eines Zahns oder eines Gebisses muß außer der funktionellen Gestaltung, der Form, der Größe und Oberfläche eines Zahnes vor allem die Zahnfarbe richtig gewählt werden. Dabei soll sich eine Zahnrestauration nicht nur harmonisch in den Zahnbogen einfügen, sondern sich auch in ihrem Farbverlauf den individuellen Gegebenheiten der Nachbarzähne und des ganzen Gebisses anpassen.

Soll eine Zahnrestauration, beispielsweise eine Krone, hergestellt werden, so wird die zu erzielende Zahnfarbe üblicherweise durch einen Vergleich eines analogen natürlichen Zahns mit einem Musterzahn oder mit einem Farbplättchen bestimmt. Der Hersteller der Musterzähne faßt die von ihm angebotenen Zahnfarben in einem Katalog, der meist Farbring genannt wird, zusammen. Die Musterzähne oder Farbplättchen sind in nebeneinanderliegenden abgegrenzten Bereichen mit Halsmasse, Dentinmasse und Schmelzmasse belegt. Die Kombination dieser drei Massen auf jedem Musterzahn ist - wie auch die verfügbare Auswahl der Zahnfarben - vom Hersteller festgelegt. Ein Zahnarzt kann also nur einen Musterzahn auswählen, dessen Farbe dem natürlichen Zahn des Patienten am ähnlichsten ist.

Für den Zahnarzt und den Zahntechniker ist die Kombination der Farbtöne des Zahnhalses, des Zahnbeins und des Zahnschmelzes nicht reproduzierbar. Außerdem können farbliche Einlagerungen, Transparenzeffekte, individuelle Schattierungen und Farbeigenheiten nicht erfaßt werden. Häufig weichen die Zahnfarbeffekte von der Musterfarbkombination erheblich ab. Der Zahntechniker rekonstruiert im Labor eine Restauration nicht nach den Gegebenheiten beim Patienten, sondern nach den ihm vorliegenden abstrakten Farbmustern. Eine ästhetisch befriedigende Restauration bleibt dabei in den meisten Fällen der Erfahrung des Zahntechnikers, größtenteils aber dem Zufall überlassen.

Bei der Auswahl der Farben eines Zahnersatzes ist eine Vielzahl von Randbedingungen zu beachten.

Zunächst ist die Eigenfarbe der Restauration wichtig. Sie setzt sich zusammen aus dem Farbton, der Farbintensität und der Farbtemperatur. Eine Rolle spielt die spektrale Zusammensetzung der jeweiligen Lichtquelle, mit der die Restauration beleuchtet wird. Der natürliche Zahn ist nicht opak, sondern an seiner Oberfläche mehr oder weniger durchscheinend; deshalb sind die Transparenzen und Transluzenzen des Zahnschmelzes und des Zahnbeines zu beachten. Lichtreflexionen führen zu Glanzstellen und Glanzlinien, daher sollte auch die Oberflächenbeschaffenheit eines Ersatzzahns mit der Oberfläche der Nachbarzähne übereinstimmen.

Aber auch Fremdfarben verschiedenen Ursprungs beeinflussen die Farbauswahl. Von Einfluß sind die Farbe der inneren (Zahnmark) und äußeren (Zahnfleisch, Zunge, Lippe, Wange) Weichteile in der Umgebung des Zahns und die Farbe der benachbarten Zahnhartsubstanzen oder Restaurationen. Rücksicht genommen werden muß auch auf das umgebende Mundmilieu; ein Austrocknen der natürlichen Zähne führt dazu, daß sie heller werden.

Mit den bisher bekannten Zahnfarben-Auswählvorrichtungen ist es nicht möglich, zu einem befriedigenden Ergebnis bei einer Restauration, geschweige denn zu einem optimalen funktionellästhetischen Zahnersatz, zu kommen.

Bei polychromatischen Farbringen, Farbtafeln oder Musterzähnen, wie sie beispielsweise aus der DE 34 29 927 A1 (HENNING), der DE 35 03 084 A1 (HERRMANN) oder der DE 36 18 153 A1 (METHE) bekannt sind, dient als Unterlage für die Farbmuster-Zahnmasse ein Metallträger. Dieses Metall beeinflußt die Farbe des Musterzahns durch das Einstrahlen einer Fremdfarbe von hinten, solche Mustersysteme sind also für eine Restauration in Vollkeramik nicht geeignet. Durch das Aufbrennen von Farbmustern auf Metallsubstrate geht auch die Transparenz und die Transluzenz zugunsten einer Opazität verloren; ein nach einem solchen Muster aufgebauter restaurierter Zahn wirkt daher nicht lebendig.

Bei den polychromatischen Farbringen sind auf einem einzigen Muster mehrere Farben angesiedelt, nämlich die Farben der Kompartimente Zahnschmelz, Zahnbein (Dentin) und Zahnhals. Die Farbe der Kompartimente können deshalb nicht einzeln angegeben werden, sondern nur in der vom Hersteller festgelegten Kombination.

Ein Erfassen der verschiedenen individuellen Farben oder Farbeffekte eines einzelnen Zahns ist nicht möglich. Schon gar nicht möglich ist ein Aussuchen des Farbtons von einzelnen farblichen Einlagerungen im Zahn. Schließlich gibt es bei den bekannten Farbringen keinen Weg, dem Zahntechniker Unterlagen über die Transparenz und die Transluzenz eines Zahns zukommen zu lassen.

Bei den bekannten Mustern ist die Grundfarbe die Grundfarbe des Dentins. Die Farben von Zahnschmelz und Zahnhals sind in undefinierter Dicke darüber-geschichtet, ihre Farbe ist also später nicht mehr eindeutig reproduzierbar.

Überhaupt ist die Schichtdicke der Farbmuster im allgemeinen viel zu hoch gewählt und außerdem noch inhomogen. Dies führt zu Fehlbeurteilungen beim Heraussuchen eines Farbmusters, weil die Farbintensität und der Farbton auch von der Schichtdicke abhängen. So kann eine Farbverschiebung dadurch auftreten, daß im Muster selbst einzelne Wellenlängen resorbiert oder reflektiert werden. Das Ergebnis kann ein Graueffekt sein. Dieser kommt durch eine Schichtung einer Reihe von Farben zustande, die zu einer subtraktiven Farbmischung führen.

Die meisten der bekannten Farbmuster sind zahnähnlich aufgebaut. Ein solches Muster kann aber nicht flächig an einen Zahn angelegt werden, es herrscht dann ein verhältnismäßig großer Abstand zwischen dem Muster und dem Objekt, dem Zahn. Das Auswählergebnis wird durch umliegende Farben verfälscht, denn es kommt zu unkontrollierten Licht- und Farbeinstrahlungen. Ein Aussuchen einer richtigen Farbe wird weiter erschwert durch die optische Isolation zwischen Muster und Zahn, denn die Luft hat einen Brechungsindex von etwa n = 1, ein Zahn und auch ein Farbmuster dagegen weisen einen Brechungsindex von n = 1,5 bis 1,8 auf.

Nicht nur die Größe und Form, sondern auch die unflexible Befestigung des Musters an einer Sonde stehen einer ordnungsgemäßen Farbbestimmung hinderlich entgegen. Auch deshalb kann ein Muster nicht flächig an einen Zahn angelegt werden. Bei einigen polychromatischen Mustersystemen ist schon die Farbe eines einzigen Kompartiments größer als ein natürlicher Zahn. Auch für den Benutzer ist durch die Sperrigkeit der Muster die Handhabung oft schwierig.

Durch die genannten Nachteile bedingt ist, daß zum "genauen" Aussuchen der Farbe viel zu viel Zeit erforderlich ist. Das Auge adaptiert aber schon nach ganz kurzer Zeit, es stellt sich auf die Lichtverhältnisse und die Farben in der Umgebung des Zahns ein. Nach Adaption des Auges auf einen Wellenlängenbereich läßt die "Trennschärfe" der Farbwahrnehmung auf diesem Wellenlängenbereich stark nach. Die Folge davon ist, daß die Farbe falsch ausgewählt wird.

Viele Farbringe kranken auch daran, daß bei den Farbmustern andere Massen verwendet werden, als sie nachher bei der Restauration Verwendung finden.

Monochromatische Farbringe gibt es als Intensivfarbräder oder als Kugelfarbsysteme. Monochromatische Farbringe sind beispielsweise aus der DE 35 17 344 A1 (KRASS), der DE 37 13 491 A1 (BOON) und der EU 234 945 A2 (FORSYTH) bekannt.

Bei Intensivfarbrädern dienen Intensivfarben zum Feinabstimmen von vorab grob bestimmten Grundfarben. Dabei werden Intensivfarben ausgewählt, die der normalen Zahnfarbe beigemischt werden. Auch hier treten die oben bereits beschriebenen Schwierigkeiten auf.

Es besteht keine Möglichkeit, den Gesamtfarbeindruck genau zu bestimmen, es ist nicht möglich, die Transluzenz und die Transparenz anzugeben, und auch die Farbe einzelner Kompartimente kann nicht reproduzierbar bestimmt werden.

Schwierig ist für den Anwender, die Intensivfarben zu einer individuellen Farbmischung genau anzugeben.

Bei Intensivfarbrädern stehen keine Originalmassen im später verwendeten Mischungsverhältnis zur Verfügung.

Die Farbmuster sind auf einen opaken Kunststoff- oder Metallträger aufgebrannt. Dies führt wieder zu einer Farbbeeinflussung durch die eingestrahlte Fremdfarbe des Trägers.

Bei Kugelfarbsystemen ist ein flächiges Anlegen des Farbmusters an einen Zahn durch die unglückliche Formgestaltung überhaupt nicht möglich. Sowohl der große mittlere Abstand der Kugel vom Zahn als auch das punktförmige Anliegen des Musters erschweren den direkten Vergleich des Farbmusters mit dem Zahn. Dag Farbmuster ist vom Zahn nicht nur optisch sehr gut isoliert, sondern auch durch Einstrahlungen aus vielen verschiedenen Quellen farblich getrennt. Die "richtige" Farbe kann daher praktisch nicht gefunden werden.

Auch bei den Kugelfarbsystemen gibt es keine Möglichkeit zur Bestimmung der Transparenzeffekte.

Keiner weiteren Erwähnung bedarf die komplizierte Handhabung derartiger Systeme. Besonders ungünstig sind die Farbringe, die mit Schablonen arbeiten, wie sie beispielsweise aus der DE 26 41 740 C2 (WIENAND) oder der EU 01 47 232 B1 (HALL) bekannt sind. Der Benutzer muß dabei durch ein Fenster einer farbigen Schablone auf den Zahn schauen und soll die Zahnfarbe mit der Farbe der Schablone vergleichen. Schon die Hanhabung an einem lebenden Objekt, nämlich einem menschlichen Patienten, ist nicht einfach. Eine korrekte Farbbestimmung ist wegen des großen Abstandes des Musters vom Zahn und wegen der Schattenwirkung des rahmenförmigen Musters nicht möglich.

Des weiteren wird sich das Auge des Untersuchers eher auf die größere Farbfläche des Schablonenrahmens als auf das kleine Fenster konzentrieren, es wird somit ungewollt farblich abgelenkt und getäuscht.

Die DE 35 23 982 A1 (MÜHLBAUER) befaßt sich mit der optischen Kopplung verschiedener Schichten eines Farbmusters zur Farbabstimmung bei der Reparatur von Zahnersatz. Hierzu wird eine optische Kopplerflüssigkeit zwischen die einander zugekehrten Flächen benachbarter Schichten eingebracht. Die DE 35 23 982 A1 bezieht sich auf Arbeiten im zahntechnischen Labor, nicht hingegen auf Arbeiten im Munde eines Patienten. Bei dieser Druckschrift geht es um den schichtweisen Aufbau von Farbmustern, genauer, um den Aufbau der Schichtung (bezüglich der Farbe) der künstli chen Zähne. Die Verwendung von Optokoppler-Flüssigkeit zwischen Farbmusterelement und natürlicher Zahnoberfläche im Munde des Patienten beschreibt Mühlbauer nicht.

Das eingangs genannte, und den Gattungsbegriff der Patentansprüche 1, 2 und 3 bildende Set zum Auswählen einer Zahnfarbe ist aus der DE 37 31 254 A1 (ZFE) bekannt. Die aus dieser Druckschrift bekannten Farbmuster liegen in der Größenordnung eines vollständigen Zahnes. Die dort gezeigten Farbmuster sind derart gekrümmt, daß ein flächiges Anlegen der Farbmuster an den Zahn, d.h. an denjenigen (sichtbaren) Partien des Zahnes, die gewöhnlich zur Farbprobe herangezogen werden, nicht möglich ist. Wie bereits aus dem Stand der Technik bekannt, besteht auch das in dieser Druckschrift gelehrte Farbmuster aus einer vom Hersteller determinierten Kombination von Farben unterschiedlicher Zahnkompartimente (Zahnschmelz-, Zahnbein- und Zahnhalsfarben). Im übrigen besteht der aus dieser Druckschrift bekannte Träger für das Farbmuster aus Metall und lediglich die für die Farbauswahl vorgesehene außen liegende eingefärbte Schicht aus Verblendmasse.

Die Erfindung befaßt sich mit dem Problem, die Farbe bzw. Farbverteilung eines Zahnersatzes an die jeweiligen Gegebenheiten beim Patienten genau anpassen zu können.

Sie löst dieses Problem durch die Gegenstände der Patentansprüche 1, 2 oder 3, also dadurch, daß das Set zum Auswählen einer Zahnfarbe für die Herstellung von Zahnersatz mehrere plättchenartige Farbmuster mit wenigstens einem gekrümmten Abschnitt und wenigstens ein Farbmuster in der Größenordnung der Breite eines Zahnes aufweist. Der gekrümmte Abschnitt dieses Farbmusters ist dabei derart gekrümmt, daß er flächig an einen Zahn anlegbar ist, genauer an die zum Farbvergleich üblicherweise hergenommenen Partien der Zähne (Patentanspruch 1).

Zusätzlich oder alternativ wird das og Problem auch dadurch gelöst, daß ein Farbmuster nur eine einzige, einem Zahnkompartiment (Zahnschmelz, Zahnbein oder Zahnhals) entsprechende Farbe aufweist (Patentanspruch 2).

Ebenfalls zusätzlich oder alternativ wird dieses Problem auch dadurch gelöst, daß die Farbmuster eine auf einem Trägerelement aufgebrachte, für die Farbauswahl vorgesehene außenliegende eingefärbte Schicht aus Verblendmasse aufweisen, wobei das Trägerelement ebenfalls aus Verblendmasse aufgebaut ist (Patentanspruch 3).

Die vorstehende Erfindung hat den Vorteil, daß das Farbmuster an alle sichtbaren Zahnflächen jedes Zahnes flächig, bzw. linienförmig angelegt werden kann, ohne daß ein störender Zwischenraum verbleibt. Als weiterer Vorteil ist anzusehen, daß die Farbe jedes Zahnkompartimentes für sich bestimmt werden kann, nämlich durch Vergleich mit einem hierfür eigenen Farbmuster. Von Vorteil ist es auch, daß die Farbmusterplättchen frei von Metall oder sonstigen Fremdstoffen und aus dem gleichen Material wie die spätere Retauration hergestellt sind.

Für den Anwender von Vorteil ist, daß das Trägerelement etwa wie ein Schirm gekrümmt und etwa dreieckig ausgebildet ist und daß die Seiten des Dreiecks konkav gekrümmt sind. Darüber hinaus ist das Farbmusterplättchen etwa so breit wie ein Zahn. Durch diese Merkmale ist es möglich, das Farbmuster an jede beliebige Stelle jedes einzelnen Zahnes dicht anzulegen und schnell und ohne störende ungewollten Einstrahlungen die Farbe des Zahns zu bestimmen. Des weiteren ist es möglich, auf einfache Weise durch ein Anlegen einer Dreieckspitze auch die Farbe einzelner Einschlüsse oder Schattierungen exakt zu ermitteln.

Auch die Handhabung der Farbmusterplättchen ist erfindungsgemäß in vorteilhafter Weise gestaltet. Als Verbindungselement zwischen dem Plättchen und einem Haltegriff dient lediglich eine kleine Kugel, die mit dem Plättchen einstückig verbunden ist. Dadurch ist das Plättchen am Haltegriff nach allen Richtungen schwenkbar und kann auf leichte Weise an alle Zähne, insbesondere auch an die hinteren Zähne und an die Rückseite der Schneidezähne, zur Farbbestimmung angelegt werden.

Die mit dem Plättchen einstückige Ausbildung des Verbindungselements zusammen mit dem glasklar transparenten Haltegriff hat den weiteren Vorteil, daß jede Einstrahlung von Fremdf arben auf das Farbmuster vermieden wird, da am Farbmuster kein Fremdmaterial vorhanden und der Haltegriff farbneutral ist. Auf das Farbmuster wirken die gleichen Lichtquellen ein wie auf das Prüfobjekt, den Zahn, und damit ist ohne weiteres eine genaue Farbbestimmung möglich.

Ein beachtlicher Vorteil der erfindungsgemäßen Vorrichtung besteht darin, daß die Farbmusterplättchen homogen aus einer Masse derselben Zahnmusterfarbe hergestellt sind.

Der Zahnmusterfarbe ist abschnittsweise in einem definierten Maß Transparenzmasse zugegeben, wobei linear fließende Übergänge mit steigendem Anteil an Transparenzmasse bestehen. Dadurch kann an jeder Stelle eines jeden Zahns nicht nur die richtige Zahnfarbe, sondern auch das richtige Maß an Transparenz ermittelt werden. Selbstverständlich ist - wegen der erfindungsgemäß vorteilhaften Form des Farbmusterplättchens - eine solche Farb- und Transparenzbestimmung auch an Einschlüssen und Farbflächen eines Zahns leicht durchzuführen.

Die genaue Farbbestimmung wird noch dadurch erleichtert, daß selbst die Oberfläche des dreieckigen Farbmusterplättchens in der gleichen Art bearbeitet, also beispielsweise poliert, ist wie die vorgesehene Restauration. Im übrigen entspricht die Dicke des Farbmusterplättchens der mittleren Verarbeitungsstärke von Zahnrestaurationen beispielsweise aus Keramik und Kunststoff, wodurch die Genauigkeit der Farbbestimmung noch weiter erhöht wird.

Nach der Erfindung können die Farben von Zahnbein und Zahnschmelz getrennt voneinander bestimmt werden, nämlich mit Hilfe von zwei Sätzen von Farbmustern.

Ein zusätziches Farbmusterplättchen dient zu einer Bestimmung der Opazität und erhält einen Übergang von glasklar transparenter Masse zu opaker Masse.

Obwohl zwischen den erfindungsgemäßen Farbmusterplättchen und dem Zahn bei der Anwendung praktisch ein Lichtschluß besteht, kann das Zwischenmedium Luft zwischen dem Zahn und dem keramischen Farbmuster durch das Einfügen eines optisch abgestimmten flüssigen oder gelartigen Mediums, z.B. Immersionsöl noch verbessert werden. Die Flüssigkeit oder das Gel dient als Lichtkoppler. Sein Brechungsindex ist entsprechend dem Brechungsindex von Zahn und Restaurationsmaterial gewählt.

Die erfindungsgemäße Ausbildung der als Handgriff dienenden Sonde in Verbindung mit dem Farbmusterplättchen ermöglicht nicht nur eine einfache Handhabung der Vorrichtung auch im Seitenzahnbereich, sondern auch einen schnellen Plättchenwechsel. Darüber hinaus können die benutzten Plättchen getrennt vom Handgriff sterilisiert werden. Beim Auswählen eines Zahnfarbmusters reicht es aus, einen einzigen Handgriff trotz mehrerer Farbmusterplättchen zu verwenden.

Da die Farbmusterplättchen z.B. aus keramischer Masse oder z.B. Kunststoff bestehen, können sie nicht nur desinfiziert, sondern sogar ohne Gefahr beliebig oft sterilisiert werden.

Weiter ist von Vorteil, den Aufbewahrungsbehälter in der Komplementärfarbe der zu bestimmenden Zahnfarben zu halten. Dies ermöglicht eine optimale Sensibilisierung des Auges des Zahnarztes vor und während der Farbauswahl und der Transparenzbestimmung und verhindert eine vorzeitige Adaption des Rezeptors Auge.

Weitere Merkmale und Vorteile ergeben sich aus der Beschreibung des Ausführungsbeispiels im Zusammenhang mit der Zeichnung, in der ein Ausführungsbeispiel schematisch dargestellt ist. Die Merkmale können einzeln oder in beliebiger Kombination verwirklicht und/oder erfindungswesentlich sein.

Die Erfindung soll nicht auf das Ausführungsbeispiel beschränkt sein, sie soll sich vielmehr auf alle Abänderungen und Ausgestaltungen, die durch die Ansprüche und die offenbarten Merkmale abgedeckt sind, erstrecken.

Ausführungsbeispiele der Erfindung sind in der Zeichnung dargestellt und in der nachfolgenden Beschreibung näher erläutert. In den Figuren zeigen:

Fig. 1 ein erfindungsgemäßes Farbmusterplättchen in Draufsicht;

Fig. 2 ein solches Plättchen von der Seite im Schnitt;

Fig. 3 ein Farbmusterplättchen in Verbindung mit einem Haltegriff, von der Seite her gesehen;

Fig. 4 eine Draufsicht auf den Haltegriff;

Fig. 5 bis 7 Anwendungen des Farbmusterplättchens bei einem Schneidezahn, und zwar von der Seite, von oben und von vorn;

Fig. 8 bis 10 die Anwendung eines Farbmusterplättchens bei einem Backenzahn, und zwar von oben, von der Seite und von vorn;

Fig. 11 ein erfindungsgemäßes Farbmusterplättchen von der Seite gesehen, teilweise im Schnitt.

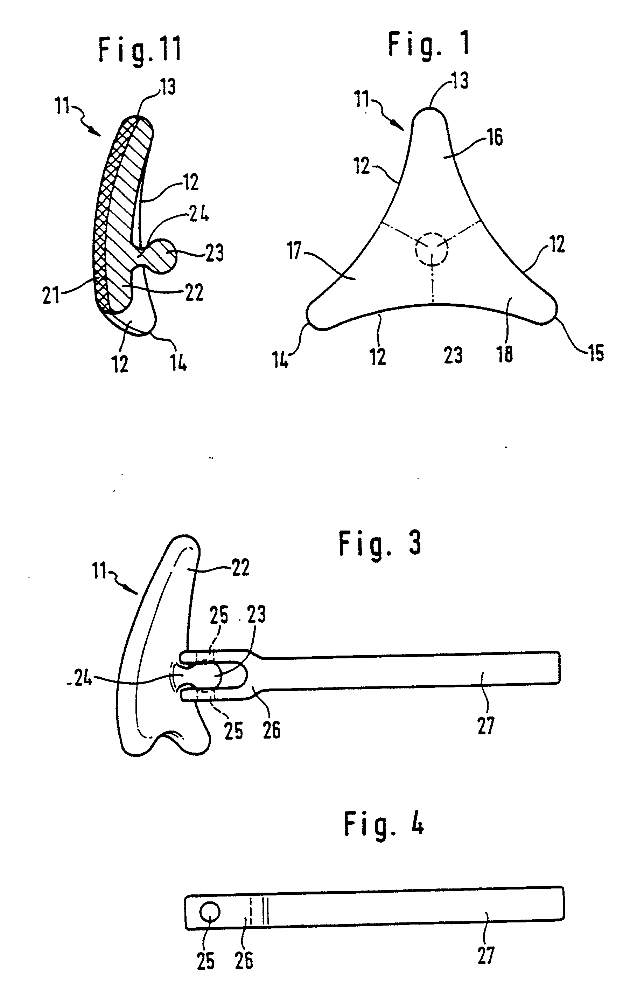

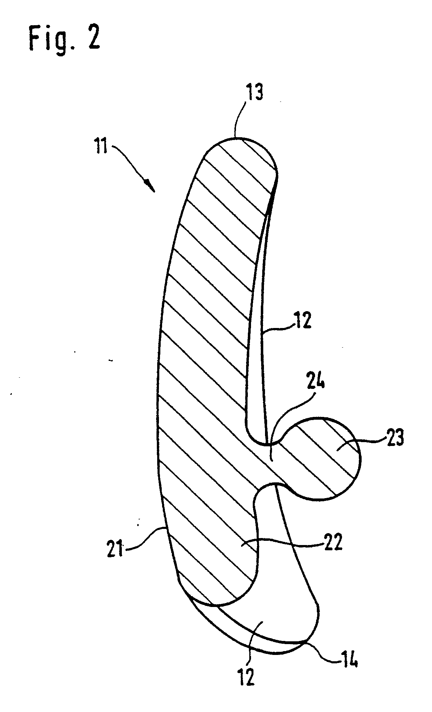

In Fig. 1 ist ein erfindungsgemäßes Farbplättchen 11 schematisch dargestellt. Das Farbplättchen hat im großen und ganzen die Form eines gleichseitigen Dreiecks, die Seiten 12 des Dreiecks sind jedoch konkav nach innen gekrümmt, die Spitzen 13, 14, 15 sind abgerundet. Die in Fig. 1 sichtbare Oberfläche des Plättchens 11 ist in drei ineinander übergehende Bereiche 16, 17, 18 aufgeteilt.

Erfindungsgemäß umfaßt das Vorrichtungssystem drei Reihen von Farbplättchen. Die Plättchen sind homogen aus einem Material einer monochromatischen Musterfarbe, entsprechend den vom Hersteller vorgegebenen - genormten - Zahnfarben, hergestellt.

In der ersten Farbmusterreihe ist der erste Farbbereich 16 beispielsweise aus reiner Zahnbeinfarbe (Dentinfarbe) aufgebaut. Im zweiten Bereich 17 ist der Zahnbeinfarbe Transparenzmasse beigemischt, das Mischungsverhältnis beträgt etwa zwei Drittel Zahnbeinmasse und ein Drittel Transparenzmasse. Im dritten Bereich 18 beträgt das Mischungsverhältnis etwa ein Drittel Zahnbeinmasse und zwei Drittel Transparenzmasse. Die drei Bereiche 16, 17, 18 sind nicht scharf gegeneinander abgegrenzt, vielmehr verlaufen die Farbübergänge von einem Bereich zu einem anderen Bereich linear fließend. Das oben angegebene Mischungsverhältnis gilt nur für die jeweiligen Spitzen 13, 14 und 15, die Dreieckspitzen 13, 14, 15 können also als das Zentrum der Bereiche 16, 17, 18 angesehen werden. Bei der zweiten Reihe von Farbmustern ist reine Zahnschmelzfarbe verwendet. Der erste Bereich 16 enthält die reine Schmelzmasse, der zweite Bereich 17 besteht aus etwa zwei Drittel Zahnschmelzmasse und einem Drittel Transparenzmasse, der dritte Bereich 18 enthält ein Drittel Schmelzmasse und zwei Drittel Transparenzmasse. Die Farbübergänge sind auch hier linear fließend. Für die dritte Farbreihe ist nur ein Plättchen vorgesehen, das als Transparenzmassenplättchen bezeichnet werden könnte. Der erste Bereich 16 ist aus glasklarer Transparenzmasse angefertigt, der zweite Bereich 17 enthält eine Mischung zu gleichen Teilen aus Transparenzmasse und opaker Masse und erscheint deshalb grau-klar, im dritten Bereich 18 ist opake Masse verwendet.

In Fig. 2 ist ein Schnitt durch das Farbmusterplättchen 11 gezeigt. Gleiche Teile sind mit den gleichen Bezugszeichen versehen, so die im Schnitt sichtbaren Dreieckspitzen 13 und 14 und die zum Teil sichtbare untere Dreieckseite 12. Im Schnittbild sieht man den Aufbau des Farbmusterplättchens 11. Das Trägerelement 22 ist - ähnlich wie ein flacher Regenschirm - im wesentlichen kugelsegmentartig gekrümmt und weist eine konvexe äußere Seite 21 auf.

Zentrisch auf der konkaven Seite des Trägerelements 22 ist ein erster Teil eines Verbindungselements gezeigt, nämlich ein kugelförmiger Kopf 23, der über einen Hals 24 mit dem Trägerelement 22 verbunden ist. Kopf 23 und Hals 24 sind mit dem Trägerelement 22 einstückig ausgebildet und bestehen aus dem gleichen Material und der gleichen Farbe. Als Material ist das gleiche Material verwendet, das auch für die spätere Zahnrestauration vorgesehen ist.

Die Größe des in den Fig. 1 und 2 gezeigten Plättchens liegt etwa in der Größenordnung einer Zahnbreite. Eine Dreieckseite 12 ist also etwa acht bis zehn Millimeter lang. Die gesamte Dicke eines Plättchens 22 entspricht etwa der Dicke einer zahnfarbenen Restauration, das sind etwa ein bis zwei Millimeter.

In Fig. 3 ist eine vollständige Vorrichtung gezeigt, wie sie vom Benutzer an das Gebiß eines Patienten geführt wird. Nicht maßstäblich ist skizziert, wie der kugelförmige Kopf 23, nämlich der eine Teil des Verbindungselements, in den Ausnehmungen 25 in eine gabelförmige Halterung 26 eines Haltegriffes 27 eingerastet ist. Die gabelförmige Halterung 26 mit den Ausnehmungen 25 stellt den anderen Teil des Befestigungselements dar. Der Haltegriff 27 mit der Gabel 26 ist vorzugsweise aus transparentem Acrylglas hergestellt und poliert. Durch diese Maßnahme werden Fremdeinstrahlungen und störende Farbreflexionen beim Auswählen der Farbe vermieden. Wie leicht zu erkennen ist, kann das Farbplättchen 11 mit Hilfe des kugelförmigen Kopfs 23 in der Gabel 26 in fast alle Richtungen verstellt werden. Damit kann der Benutzer der erfindungsgemäßen Vorrichtung das Farbmusterplättchen 11 im Mund des Patienten an sämtliche Zähne, und zwar sowohl an ihre Außenseite als auch an ihre Innenseite, ohne Schwierigkeiten anlegen.

Fig. 4 zeigt schematisch und nicht maßstabsgerecht eine andere Ansicht des Haltegriffs 27 mit der Gabel 26.

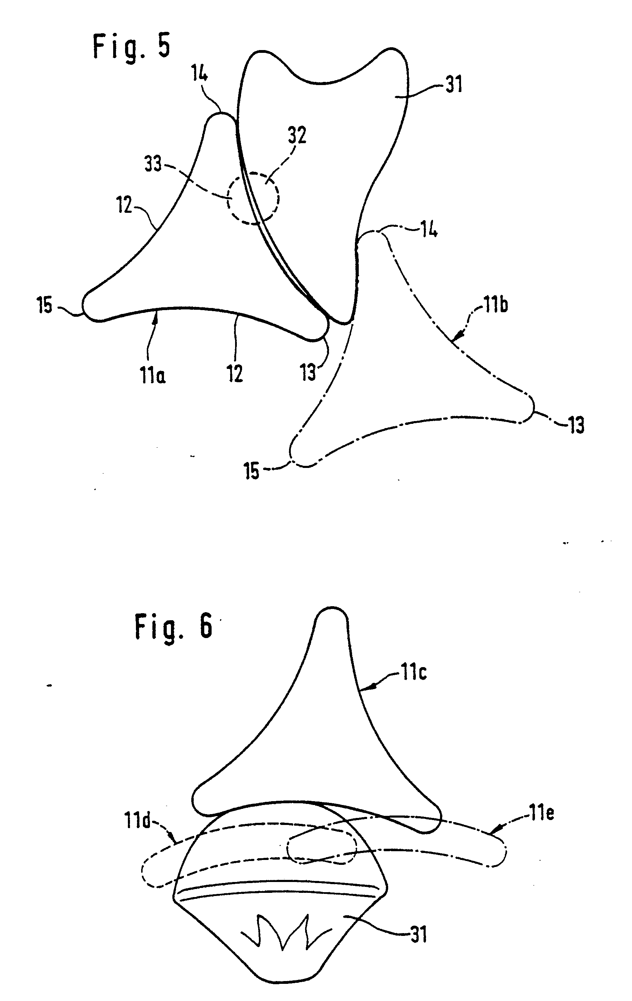

In Fig. 5 ist ein Schneidezahn 31 in einer Seitenansicht skizziert. Es sind zwei von den zahllosen Möglichkeiten, ein Zahnfarbenmusterplättchen 11 an den Zahn 31 anzulegen, angedeutet. Als Beispiel sei angenommenm daß der Benutzer gerade einen Farbfleck 32 am Zahn 31 untersuchen will. Zunächst ermittelt er aus seinem Farbenkatalog (Musterplättchensortiment) die Farbe, die für den Zahnfleck zutrifft. Dann legt er - wie in Fig. 5 gezeigt - das als zutreffend ermittelte Farbplättchen an den Zahn, um das Verhältnis von Zahnfarbe zu Transparenzmasse zu bestimmen. Im gezeigten Beispiel hat er das optimale Verhältnis an einer bestimmten Stelle der Seiten 12 zwischen den Spitzen 13 und 14 gefunden. Am Beispiel der Fig. 5 sieht man auch, daß der Krümmungsradius der Seiten 12 so ausgelegt ist, daß ein Plättchen 11 praktisch an alle Zahnflächen angelegt werden kann. In Fig. 5 ist als weiteres Beispiel angedeutet, wie auf der lingualen Seite des Zahns 31 die eine Spitze 14 des Plättchens 11 zur Farbuntersuchung angelegt ist.

Fig. 6 zeigt einige Anwendungsbeispiele einer Farbuntersuchung, bei der ein Schneidezahn von oben skizziert ist.

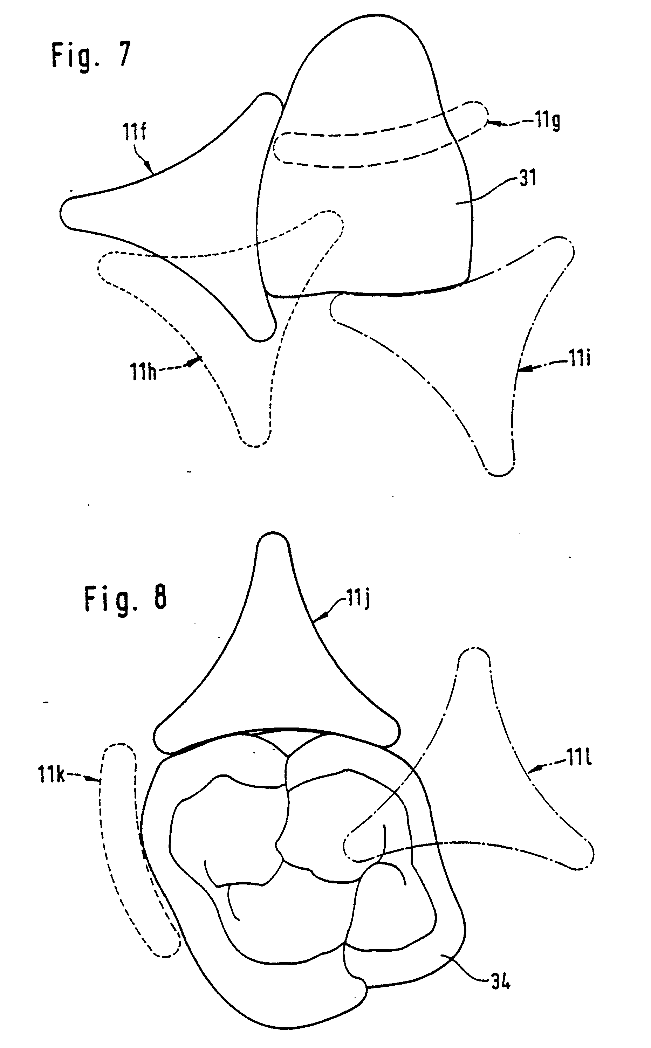

In Fig. 7 sind vier Anwendungsbeispiele für einen Schneidezahn 31, der in Frontansicht zu sehen ist, dargestellt.

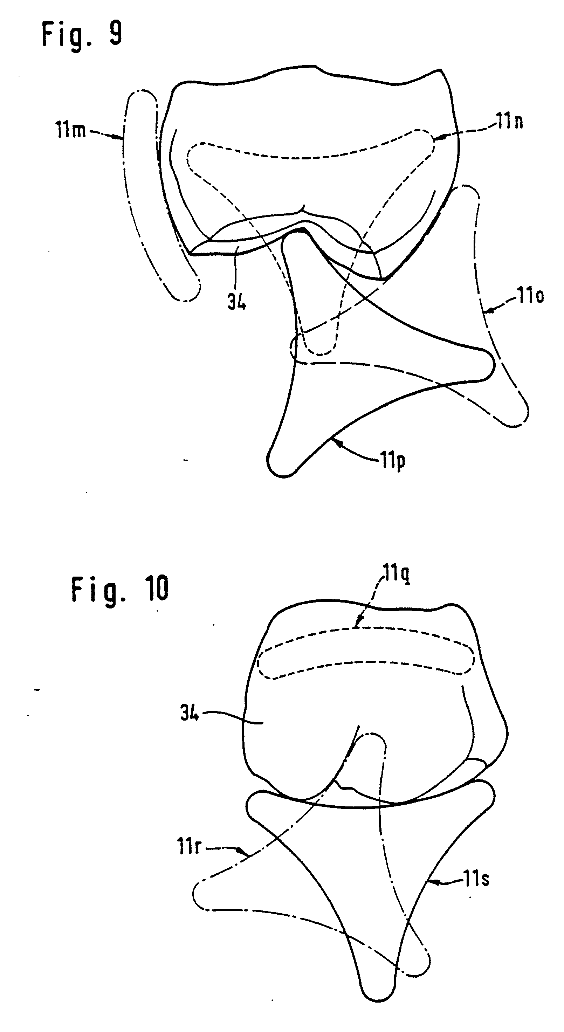

Die Fig. 8, 9, 10 zeigen zahlreiche Anwendungsmöglichkeiten für die erfindungsgemäße Vorrichtung in Verbindung mit einem Backenzahn 34.

Nicht dargestellt ist in den Fig. 5 bis 10, daß zweckmäßigerweise zwischen das Plättchen 11 und die Zähne 31 und 34 ein Tropfen optischer Kopplungsflüssigkeit gebracht werden kann, um eine - wenn auch noch so kleine - optische Unterbrechung zu vermeiden. Die Flüssigkeit (z.B. Immersionsöl) dient als Lichtkoppler und hat den gleichen Brechungsindex wie der natürliche Zahn und der Zahnersatzwerkstoff, nämlich etwa n = 1,5 ... 1,8. Durch den damit erzielten optischen Lichtschluß können Fehlinterpretationen der Zahnfarbe vollends ausgeschlossen werden.

Zweckmäßigerweise werden die Plättchen in einem Behältnis aufbewahrt und vor allem auch vor ihrer Anwendung aus einem solchen Behältnis entnommen, das in einer Komplemtärfarbe zu der mittleren Farbe der Plättchen gehalten ist. Eine solche Komplementärfarbe liegt im blauen Bereich und hat eine Wellenlänge von etwa 480 ... 490 nm. Damit kann eine Adaption oder eine vorzeitige Readaption der Augen des Benützers an die Zahnfarben umgangen werden.

Es sei noch darauf hingewiesen, daß das erfindungsgemäße Verbindungselement 23, 26 es auch gestattet, die Plättchen 11 bei der Suche nach einer optimalen Farbe schnell auszuwechseln. Dies hat die zusätzliche angenehme Nebenwirkung, daß für jede Farbuntersuchung zwar eine Mehrzahl von Plättchen, aber nur ein einziger Handgriff 27 benötigt wird und anschließend sterilisiert werden muß.

In Fig. 11 ist eine Variante gezeigt, in der auf ein Trägerelement 22, das aus beliebigem Material gefertigt ist, als konvexe Fläche 21 eine Schicht z.B. aus Keramik und/oder Kunststoff aufgetragen ist. Diese Schicht 21 weist die oben schon beschriebenen Farb-, Transparenz-und Opak-Eigenschaften auf.

## Ansprüche

1. Set zum Auswählen einer Zahnfarbe für die Herstellung von Zahnersatz, mit mehreren plättchenartigen Farbmustern (11) mit wenigstens einem gekrümmten Abschnitt (12)
dadurch **gekennzeichnet, daß**
ein Farbmuster (11) in der Größenordnung der Breite eines Zahnes (31; 34) liegt und der Abschnitt (12) derart gekrümmt ist, daß er flächig an einen Zahn (31; 34) anlegbar ist.

2. Set zum Auswählen einer Zahnfarbe für die Herstellung von Zahnersatz, mit mehreren plättchenartigen Farbmustern (11) mit wenigstens einem gekrümmten Abschnitt (12), insbesondere nach Anspruch 1, dadurch gekennzeichnet, daß ein Farbmuster (11) nur eine einzige, einem Zahnkompartiment (Zahnschmelz, Zahnbein, Zahnhals) entsprechende Farbe aufweist.

3. Set zum Auswählen einer Zahnfarbe für die Herstellung von Zahnersatz, mit mehreren plättchenartigen Farbmustern (11) mit wenigstens einem gekrümmten Abschnitt (12), insbesondere nach Anspruch 1 oder 2, bei welchem die Farbmuster (11) eine auf einem Trägerelement (22) aufgebrachte, für die Farbauswahl vorgesehene außen liegende eingefärbte Schicht (21) aus Verblendmasse aufweisen, dadurch gekennzeichnet, daß das Trägerelement (22) ebenfalls aus Verblendmasse aufgebaut ist.

4. Set nach Anspruch 3, dadurch gekennzeichnet, daß das Trägerelement (22) vollständig aus Keramikmaterial, Kunststoff und/oder anderen zahnfarbenen Restaurationsmaterialien (z.B. Glasionomerzement) hergestellt ist.

5. Set nach Anspruch 3 oder 4, dadurch gekennzeichnet, daß das Trägerelement (22) aus dem gleichen Material hergestellt ist, wie es zur Herstellung des Zahnersatzes bereitgehalten wird.

6. Set nach Anspruch 1 oder einem der vorstehenden, auf Anspruch 1 rückbezogenen Ansprüche, dadurch gekennzeichnet, daß das Farbmuster (11) etwa den Umriß eines Dreiecks, insbesondere gleichseitigen Dreiecks, aufweist.

7. Set nach Anspruch 6, dadurch gekennzeichnet, daß die Seiten (12) des Dreiecks konkav gekrümmt sind.

8. Set nach Anspruch 6 oder 7, dadurch gekennzeichnet, daß die Spitzen (13, 14, 15) des Dreiecks abgerundet sind.

9. Set nach einem der Ansprüche 6 bis 8, dadurch gekennzeichnet, daß die Länge einer Dreieckseite (12) in der Größenordnung der Breite eines Zahnes (31; 34) liegt.

10. Set nach einem der Ansprüche 6 bis 9, dadurch gekennzeichnet, daß die eine (äußere) Fläche (21) des Farbmusters (11) konvex gekrümmt ist.

11. Set nach einem der Ansprüche 6 bis 10, dadurch gekennzeichnet, daß die andere (innere) Fläche des Farbmusters (11) konkav ausgebildet ist.

12. Set nach einem der vorhergehenden Ansprüche, dadurch gekennzeichnet, daß die Dicke des Farbmusters (11) in der Größenordnung der mittleren Verarbeitungsstärke von Zahnersatz liegt.

13. Set nach einem der Ansprüche 6 bis 12, dadurch gekennzeichnet, daß die Farbmuster (11) über ein allseitig verstellbares Verbindungselement (23, 24, 25, 26) mit einer Haltevorrichtung (27) verbindbar sind.

14. Set nach Anspruch 13, gekennzeichnet durch folgende Merkmale des Verbindungselementes (23 bis 26):

- ein kugelförmiger Kopf (23) ist über einen Hals (24) mit dem Farbmuster (11) verbunden und

- eine an der Haltevorrichtung (27) befestigte gabelförmige Halterung (26) weist auf der Innenseite der Gabelzinken Ausnehmungen (25) zum Einrasten des kugelförmigen Kopfes (23) auf.

15. Set nach den Ansprüchen 10 und 14, dadurch gekennzeichnet, daß der kugelförmige Kopf (23) auf der (der äußeren Fläche (21) abgewandten inneren) anderen Fläche des Farbmusters (11) befestigt ist.

16. Set nach Anspruch 15, dadurch gekennzeichnet, daß der kugelförmige Kopf (23) im Zentrum der anderen (inneren) Fläche angeordnet ist.

17. Set nach einem der Ansprüche 13 bis 16, dadurch gekennzeichnet, daß das Verbindungselement (23 und 24) aus dem gleichen Verblendmassenmaterial hergestellt ist wie das Trägerelement (22).

18. Set nach einem der Ansprüche 13 bis 17, dadurch gekennzeichnet, daß das Verbindungselement (23 und 24) einstückig mit dem Farbmuster (11) ausgebildet ist.

19. Set nach einem der Ansprüche 14 bis 18, dadurch gekennzeichnet, daß die Höhe von kugelförmigem Kopf (23) mit Hals (24) nur wenig mehr als die Dicke des Farbmusters (11) mißt.

20. Set nach einem der Ansprüche 13 bis 19, dadurch gekennzeichnet, daß der Haltegriff (25 bis 27) aus glasklarem, transparenten Material hergestellt ist.

21. Set nach Anspruch 20, dadurch gekennzeichnet, daß das Farbmuster (11) aus der Zahnersatzmasse eines Zahnkompartiments oder aus Transparenzmasse hergestellt ist.

22. Set nach einem der vorhergehenden Ansprüche, dadurch gekennzeichnet, daß die zur Anlage an den Zahn vorgesehene Oberfläche (21) des Farbmusters (11) in gleicher Weise behandelt ist, wie für die Herstellung des Zahnersatzes vorgesehen.

23. Set nach einem der Ansprüche 20 bis 22, dadurch gekennzeichnet, daß das Farbmuster (11) zusätzlich zur Zahnmusterfarbe auch Transparenzmasse oder zusätzlich zur Transparenzmasse auch opake Masse aufweist.

24. Set nach Anspruch 23, dadurch gekennzeichnet, daß das Farbmuster (11) mehrere Bereiche (16, 17, 18) mit jeweils unterschiedlichem Mischungsverhältnis von Zahnmusterfarbe und Transparenzmasse oder Transparenzmasse und opaker Masse umfaßt.

25. Set nach Anspruch 24, dadurch gekennzeichnet, daß das Mischungsverhältnis bei seinem Übergang von dem einen Bereich (16, 17, 18) in den anderen Bereich (17, 18, 16) sich linear fließend ändert.

26. Set nach Anspruch 24 oder 25, dadurch gekennzeichnet, daß drei Bereiche (16, 17, 18) vorgesehen sind,

- von denen ein erster (16) die reine Zahnmusterfarbe, ein zweiter (17) etwa zwei Drittel Zahnmusterfarbe und ein Drittel Transparenzmasse und der dritte (18) etwa ein Drittel Zahnmusterfarbe und zwei Drittel Transparenzmasse oder

- von denen ein erster (16) die reine Transparenzmasse, ein zweiter (17) etwa gleiche Anteile von Transparenzmasse und opaker Masse und der Dritte (18) reine opake Masse enthält.

27. Set nach den Ansprüchen 6 und 23, dadurch gekennzeichnet, daß die drei Bereiche (16, 17, 18) so angeordnet sind, daß das Farb- oder Transparenz-bzw. opake Zentrum im wesentlichen in einer der Dreiecksspitzen (13, 14, 15) liegt.

28. Set nach einem der vorhergehenden Ansprüche, gekennzeichnet durch eine zwischen das Farbmuster (11) und den zu berurteilenden Zahn (31; 34) einfügbare Lichtkoppler-Flüssigkeit, bzw. Gel, deren Brechungsindex ähnlich dem des Zahnes (31; 34) und des Farbmusters (11), insbesondere ein Immersionsöl mit dem Brechungsindex n = 1,518 nach DIN 58 884 ist.

29. Set nach einem der vorhergehenden Ansprüche mit einem Aufbewahrungsbehälter, dadurch gekennzeichnet, daß mindestens die Innenwände des Aufbewahrungsbehälters eine Farbe der Wellenlänge in der Größenordnung von 480 bis 490 nm aufweisen.

Fig.11

Fig. 1

Fig. 3

Fig. 4

## Fig. 2

Fig. 5

Fig. 6

Fig. 7

11f

11g

31

11h

11i

Fig. 8

11j

11k

11l

34

Fig. 9

11m

11n

34

11o

11p

Fig. 10

11q

34

11r

11s

Europäisches
Patentamt

# EUROPÄISCHER
# RECHERCHENBERICHT

Nummer der Anmeldung

## EP 90 11 7225

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-A-3 731 254 (ZFE) <br> * Insgesamt * <br> --- | 1-3,6,10, 11,13,15 | A 61 C 19/10 |
| A | US-A-3 748 741 (YERKES) <br> * Spalte 2, Zeile 61 - Spalte 5, Zeile 10; Figuren * <br> --- | 1-4,10, 11,13,14, 17,18 | |
| A,D | DE-A-2 641 740 (LOHMILLER) <br> * Seite 6, Zeilen 4-10; Seite 11, Zeilen 1-8; Figur 3 * <br> --- | 13,21,23 | |
| A,D | DE-A-3 429 927 (HENNING) <br> * Ansprüche 1-5; Figuren 2-4,6,7 * <br> --- | 23,24,26 | |
| A | US-A-3 405 446 (WIENER) <br> * Zusammenfassung; Figur 3 * <br> --- | 24 | |
| A,D | DE-A-3 523 982 (MÜHLBAUER) <br> * Zusammenfassung * <br> --- | 28 | |
| A | DE-U-8 809 755 (KIRSCHNER) <br> * Anspruch 1; Figuren * <br> --- | 29 | |
| A | US-A-3 507 042 (HANA) <br> --- | | |
| A,D | EP-A-0 234 945 (FORSYTH) <br> --- | | |
| A | US-A-4 618 325 (APPELLE) <br> --- | | |
| A | US-A-4 115 922 (ALDERMAN) <br> ----- | | |

| | | RECHERCHIERTE SACHGEBIETE (Int. Cl.5) |
|---|---|---|
| | | A 61 C |

Der vorliegende Recherchenbericht wurde für alle Patentansprüche erstellt

| Recherchenort | Abschlußdatum der Recherche | Prüfer |
|---|---|---|
| Den Haag | 27 November 90 | KLEIN C. |